(19) Europäisches Patentamt
European Patent Office
Office européen des brevets

(11) **EP 3 758 206 B1**

(12) **FASCICULE DE BREVET EUROPEEN**

(45) Date de publication et mention
de la délivrance du brevet:
**01.02.2023 Bulletin 2023/05**

(21) Numéro de dépôt: **20176686.2**

(22) Date de dépôt: **27.05.2020**

(51) Classification Internationale des Brevets (IPC):
**H02M 1/32** (2007.01)     **H02M 3/337** (2006.01)
**H02M 1/00** (2006.01)

(52) Classification Coopérative des Brevets (CPC):
**H02M 1/32; H02M 3/01; H02M 3/33571;**
H02M 1/0058; H02M 1/325; Y02B 70/10

(54) **SYSTEME ELECTRIQUE ET METHODE DE PROTECTION D'UN CONVERTISSEUR DC/DC**

ELEKTRISCHES SYSTEM UND METHODE ZUM SCHUTZ EINES
GLEICHSTROM-GLEICHSTROM-WANDLERS

ELECTRICAL SYSTEM AND METHOD FOR PROTECTING A DC/DC CONVERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.06.2019 FR 1907063**

(43) Date de publication de la demande:
**30.12.2020 Bulletin 2020/53**

(73) Titulaire: **Valeo eAutomotive France SAS**
**95800 Cergy (FR)**

(72) Inventeurs:
• ZHOU, Huan
  **78800 HOUILLES (FR)**
• YANG, Gang
  **92400 COURBEVOIE (FR)**

(74) Mandataire: **Valeo Powertrain Systems**
**Service Propriété Intellectuelle**
**Immeuble le Delta**
**14, avenue des Béguines**
**95892 Cergy Pontoise (FR)**

(56) Documents cités:
**CN-U- 207 518 331     US-A1- 2011 255 321**

**Description**

## DOMAINE TECHNIQUE DE L'INVENTION

La présente invention concerne le domaine des systèmes d'alimentation d'équipements électriques et/ou électroniques notamment destinés à être embarqués dans un véhicule automobile, en particulier un véhicule automobile électrique ou hybride. La présente invention concerne plus particulièrement le domaine des convertisseurs continu-continu, c'est-à-dire des systèmes électriques permettant de convertir une tension d'entrée continue en une tension de sortie continue, inférieure ou supérieure à la tension d'entrée.

De manière connue, un véhicule automobile électrique ou hybride comprend un système de motorisation électrique, alimenté par une batterie d'alimentation haute tension via un réseau électrique embarqué haute tension, et divers équipements électriques auxiliaires, alimentés par une batterie d'alimentation basse tension via un réseau électrique embarqué basse tension.

## ETAT DE LA TECHNIQUE

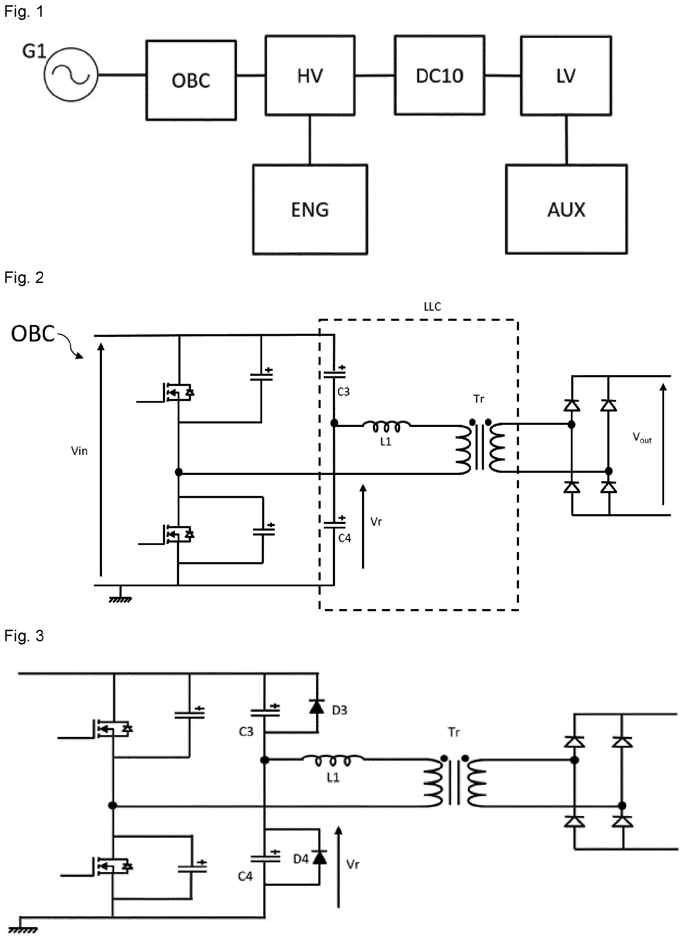

La figure 1 représente un schéma bloc fonctionnel d'un système électrique embarqué de l'état de l'art. Ainsi, la batterie d'alimentation haute tension HV assure une fonction d'alimentation en énergie du système de motorisation électrique ENG permettant la propulsion du véhicule. La batterie d'alimentation basse tension LV alimente des équipements électriques auxiliaires AUX, tels que des calculateurs embarqués, des moteurs de lève-vitres, un système multimédia, etc. La batterie d'alimentation haute tension HV délivre typiquement une tension comprise entre 100 V et 900 V, de préférence entre 100 V et 500 V, tandis que la batterie d'alimentation basse tension LV délivre typiquement une tension de l'ordre de 12 V, 24 V ou 48 V. Ces deux batteries d'alimentation haute et basse tension HV et LV, doivent pouvoir être chargées.

La recharge en énergie électrique de la batterie d'alimentation haute tension HV est réalisée de manière connue en la connectant, via un chargeur électrique OBC du véhicule, à un réseau d'alimentation électrique externe, par exemple le réseau électrique alternatif domestique G1. Enfin, toujours en référence à la figure 1, la charge de la batterie d'alimentation basse tension LV est réalisée de manière connue par la batterie d'alimentation haute tension HV. Le système comprend à cette fin un convertisseur continu-continu DC10, connecté entre la batterie d'alimentation haute tension HV et la batterie d'alimentation basse tension LV.

Typiquement, le chargeur électrique OBC comprend un convertisseur continu-continu isolé. On connait un circuit convertisseur LLC résonant illustré en figure 2, comprenant deux capacités de résonance C3, C4, une bobine de résonance L1 et un transformateur Tr. Dans le cas où la puissance de sortie du circuit augmente, le courant de résonance du transformateur Tr augmente aussi et enfin, l'amplitude de la tension Vr aux bornes de chaque capacité de résonance C3, C4 augmente. Lorsque les variations d'amplitude de tension Vr sont trop élevées, elles peuvent provoquer des surcharges dans les capacités de résonance C3 et C4 et à la sortie du circuit convertisseur LLC.

De manière connue, en référence à la figure 3, pour éviter une potentielle détérioration du circuit convertisseur LLC suite à une surcharge, il faut protéger les capacités de résonance C3 et C4 en limitant la tension à leurs bornes respectives. Pour cela, une première solution consiste à placer des diodes dites « ultra rapides » D3, D4, désignant des diodes qui commutent à très haute fréquence comme dans le cas présent à plus de 275 kHz, en parallèle des capacités de résonance C3 et C4. Ainsi, lorsque la tension Vr est positive, la diode est bloquante, mais quand la tension Vr est négative, la diode est passante et court-circuite la capacité de résonance. Ceci empêche ainsi la surcharge des capacités de résonance C3 et C4.

Cette solution présente des inconvénients, notamment le coût élevé de ces diodes ultra rapides, sachant qu'il en faut deux par circuit. Par ailleurs, les deux diodes ultra rapides ne peuvent pas court-circuiter en même temps. Enfin, la tension de seuil de court-circuitage par la diode n'est pas réglable puisqu'elle est intrinsèque à la diode.

Pour pallier ces inconvénients, la présente invention propose un système électrique configuré pour utiliser une méthode de détection de surcharge de la capacité de résonance, basée sur une mesure de courant.

Les documents US2011/255321 et CN207518331 divulguent des convertisseurs LLC résonants.

## PRESENTATION DE L'INVENTION

Plus précisément, l'invention vise un système électrique permettant la conversion d'une tension continue en une autre tension continue, comprenant :

- un convertisseur de tension continu-continu résonant comprenant un circuit convertisseur LLC résonant comprenant une inductance de résonance, deux capacités de résonnance et un transformateur,
- une unité de commande comprenant :

o un premier module de détermination d'une valeur maximale de la tension aux bornes de chaque capacité de résonance et d'une valeur minimale de la tension aux bornes de chaque capacité de résonance en fonction d'une tension de sortie du convertisseur de tension continu-continu résonant,

∘ un module de comparaison entre ladite valeur maximale de la tension aux bornes de chaque capacité de résonance et un seuil haut de tension correspondant à ladite tension de sortie et entre ladite valeur minimale de la tension aux bornes de chaque capacité de résonance et un seuil bas de tension correspondant à ladite tension de sortie,

∘ un élément de détection de défaillance configuré pour détecter une défaillance du convertisseur de tension continu-continu résonant si :

- ladite valeur maximale de la tension aux bornes de chaque capacité de résonance est supérieure ou égale au seuil haut de tension, ou

- ladite valeur minimale de la tension aux bornes de chaque capacité de résonance est inférieure ou égale au seuil bas de tension.

Avantageusement, en détectant une défaillance du convertisseur de tension continu-continu résonant, le système électrique détecte une surcharge des capacités de résonnance.
De manière préférée, le convertisseur de tension continu-continu résonant du système électrique comprend un redresseur, connecté au niveau du secondaire du transformateur.
Avantageusement, le redresseur permet de convertir une tension alternative carrée en une tension redressée pulsée, c'est-à-dire une tension variable mais de signe constant.
De préférence, le système électrique comprend un deuxième module de détermination, configuré pour déterminer la valeur moyenne du courant de sortie, à partir d'un point de mesure situé à une borne de sortie du redresseur, notamment une borne basse de sortie du redresseur.
De manière avantageuse, le premier module de détermination du système électrique est configuré pour déterminer la valeur maximale de la tension aux bornes de chaque capacité de résonance et la valeur minimale de la tension aux bornes de chaque capacité de résonance à partir de la tension d'entrée du convertisseur de tension continu-continu résonant, la valeur moyenne du courant de sortie, la fréquence de commutation du convertisseur de tension continu-continu résonant, la valeur des capacités de résonance, la valeur de la tension de sortie du redresseur, le rapport de transformation du transformateur et l'inductance magnétisante primaire du transformateur.
De manière préférée, le premier module de détermination du système électrique est configuré pour : déterminer la valeur maximale de la tension aux bornes de chaque capacité de résonance suivant la formule :

[Math. 1]

$$V_{r\_max} = \frac{1}{2}V_{in} + \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

et déterminer la valeur minimale de la tension aux bornes de chaque capacité de résonance suivant la formule :

[Math. 2]

$$V_{r\_min} = \frac{1}{2}V_{in} - \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

où $V_{in}$ est la tension d'entrée du convertisseur de tension continu-continu résonant, $C_r$ est la valeur des capacités de résonance, $F_s$ est la fréquence de commutation du convertisseur de tension continu-continu résonant, N désigne le rapport de transformation du transformateur, $I_{s\_avg}$ est la valeur moyenne du courant de sortie, $V_{out}$ est la tension de sortie et $L_m$ désigne l'inductance magnétisante primaire du transformateur.
De préférence, le module de comparaison du système électrique est configuré de sorte que :

ledit seuil haut de tension correspond à une valeur maximale de tension autorisée aux bornes de chaque capacité de résonance, notamment au-dessus de laquelle ladite capacité est en surcharge, et

ledit seuil bas de tension correspond à une valeur minimale de tension autorisée aux bornes de chaque capacité de résonance, notamment en dessous de laquelle ladite capacité de résonance est en surcharge.

Avantageusement, le module de comparaison du système électrique, via les comparaisons effectuées, permet de détecter une potentielle surcharge des capacités de résonance.

L'invention concerne également un procédé de détection d'une surcharge d'un convertisseur de tension continu-continu résonant mis en oeuvre dans un système électrique comportant un convertisseur de tension continu-continu résonant comprenant un circuit convertisseur LLC résonant qui comprend une inductance de résonance, deux capacités de résonnance et un transformateur, ledit procédé étant caractérisé en ce qu'il comprend des étapes de :

- détermination d'une tension de sortie du convertisseur de tension continu-continu résonant,

- détermination d'une valeur maximale de la tension aux bornes de chaque capacité de résonance et d'une valeur minimale de la tension aux bornes de chaque capacité de résonance en fonction d'une tension de sortie du convertisseur de tension continu-continu résonant,

- comparaison entre un seuil haut de tension et la valeur maximale de la tension aux bornes de chaque capacité de résonance et entre un seuil bas de tension et la valeur minimale de la tension aux bornes de chaque capacité de résonance,

- détection d'une défaillance du convertisseur de tension continu-continu résonant si ladite valeur maximale de la tension aux bornes de chaque capacité de résonance est supérieure ou égale au seuil haut de tension, et/ou si ladite valeur minimale de la tension aux bornes de chaque capacité de résonance est inférieure ou égale au seuil bas de tension.

Dans une variante, le procédé comprend les étapes de :

- détermination, notamment de mesure, du courant de sortie,

- détermination de la valeur moyenne dudit courant de sortie sur une durée dite « durée d'évaluation »,

- détermination de la valeur maximale de la tension aux bornes de chaque capacité de résonance et de la valeur minimale de la tension aux bornes de chaque capacité de résonance sur la durée d'évaluation, à partir de la valeur moyenne du courant de sortie, déterminée à l'étape précédente, et de la tension de sortie du système électrique.

De manière préférée, l'étape de détection de défaillance du procédé correspond à la détection d'une surcharge d'une capacité de résonance.

De manière avantageuse, après l'étape de détection d'une défaillance du procédé, le procédé comprend une étape de coupure du convertisseur de tension continu-continu résonant, dans laquelle le fonctionnement du convertisseur de tension continu-continu résonant est arrêté.

De préférence, le procédé comprend une phase préliminaire de calibration dans laquelle ledit seuil bas de tension, respectivement ledit seuil haut de tension, est sélectionné dans un ensemble de valeurs de seuil bas de tension, respectivement dans un ensemble de valeurs de seuil haut de tension, en fonction de la valeur de la tension de sortie du convertisseur de tension continu-continu résonant.

De manière préférée, lors de la phase préliminaire de calibration du procédé, ledit ensemble de valeurs de seuil bas de tension est déterminé par comparaison point par point d'ensembles de valeurs basses de tension et en sélectionnant la valeur maximale parmi les valeurs du premier, deuxième et troisième ensembles de valeurs basses de tension pour chaque valeur usuelle de tension de sortie,

lesdits ensembles de valeurs basses de tension étant définis selon les formules suivantes :

[Math. 3]

$$V_{r\_\text{min}(1)} = \frac{1}{2}V_{in(nom)} - \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

[Math. 4]

$$V_{r\_\text{min}(2)} = \frac{1}{2}V_{in(min)} - \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

[Math. 5]

$$V_{r\_\text{min}(3)} = \frac{1}{2}V_{in(max)} - \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

où $V_{in(nom)}$ est la valeur nominale de la tension d'entrée du convertisseur de tension continu-continu résonant, $V_{in(min)} = V_{in(nom)} - 0{,}5{*}\Delta V_{in}$ est la valeur nominale minimale de la tension d'entrée, $V_{in(max)} = V_{in(nom)} + 0{,}5{*}\Delta V_{in}$ est la valeur nominale maximale de la tension d'entrée et $\Delta V_{in}$ représente l'ondulation autour de la valeur nominale de la tension d'entrée,

ledit ensemble de valeurs de seuil haut de tension, est déterminé par comparaison point par point d'ensembles de valeurs hautes de tension et en sélectionnant la valeur minimale parmi les valeurs du premier, deuxième et troisième ensembles de valeurs hautes de tension pour chaque valeur usuelle de tension de sortie,
lesdits ensembles de valeurs hautes de tension étant définis selon les formules suivantes :

[Math. 6]

$$V_{r\_\text{max}(1)} = \frac{1}{2}V_{in(nom)} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

[Math. 7]

$$V_{r\_\text{max}(2)} = \frac{1}{2}V_{in(min)} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

[Math. 8]

$$V_{r\_\text{max}(3)} = \frac{1}{2}V_{in(max)} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

## PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

Fig. 1 (déjà commentée) : la figure 1 représente le schéma bloc fonctionnel d'un système électrique selon l'état de l'art ;

Fig. 2 (déjà commentée) : la figure 2 représente un schéma électronique d'un système électrique selon l'état de l'art ;

Fig. 3 (déjà commentée) ; la figure 3 représente un schéma électronique d'un système électrique selon l'état de l'art ;

Fig. 4 : la figure 4 illustre le schéma bloc fonctionnel d'un système électrique selon l'invention ;

Fig. 5 : la figure 5 illustre le schéma électronique du système électrique de la figure 4 ;

Fig. 6 : la figure 6 illustre un schéma bloc représentant le procédé de détection de surcharge selon l'invention ;

Fig. 7 : la figure 7 illustre une phase de calibration du procédé selon un exemple de l'invention,

Fig. 8 : la figure 8 illustre graphiquement un premier, deuxième et troisième ensembles de valeurs hautes de tension en fonction de la tension de sortie du convertisseur continu-continu résonnant selon un exemple de l'invention ;

Fig. 9 : la figure 9 illustre graphiquement un ensemble de valeurs de seuil haut de tension en fonction de la tension de sortie du convertisseur continu-continu résonnant selon un exemple de l'invention ;

Fig. 10 : la figure 10 illustre graphiquement un premier, deuxième et troisième ensembles de valeurs basses de tension en fonction de la tension de sortie du convertisseur continu-continu résonnant selon un exemple de l'invention ;

Fig. 11 : la figure 11 illustre graphiquement un ensemble de valeurs de seuil bas de tension en fonction de la tension de sortie du convertisseur continu-continu résonnant selon un exemple de l'invention.

Il faut noter que les figures exposent l'invention de manière détaillée pour mettre en oeuvre l'invention, lesdites figures pouvant bien entendu servir à mieux définir l'invention le cas échéant.

## DESCRIPTION DETAILLEE DE L'INVENTION

Il est rappelé que la présente invention est décrite ci-après à l'aide de différents modes de réalisation non limitatifs et est susceptible d'être mise en oeuvre dans des variantes à la portée de l'homme du métier, également visées par la présente invention.

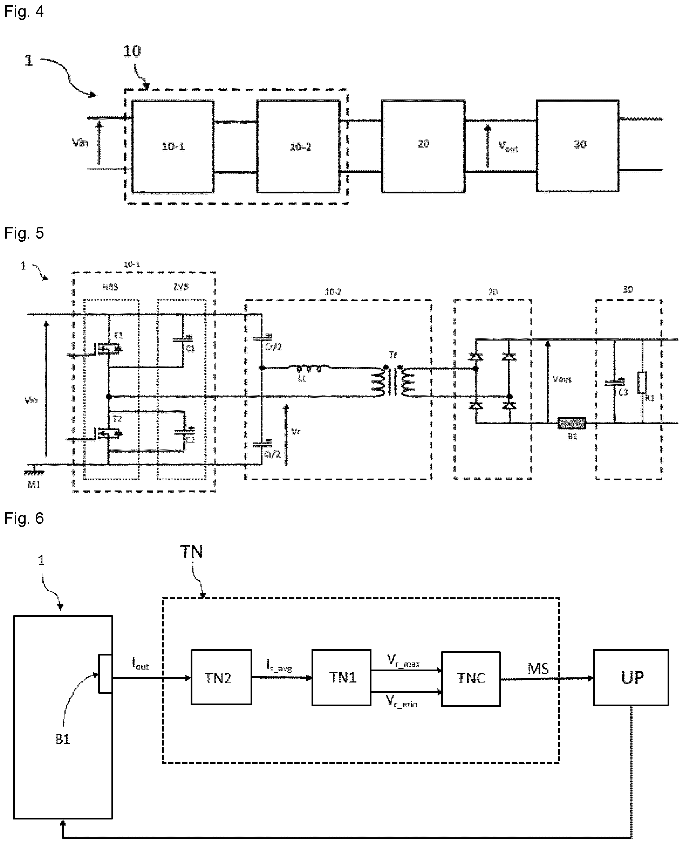

La figure 4 représente un schéma bloc fonctionnel d'une forme de réalisation d'un système électrique destiné à être monté dans un véhicule automobile électrique ou hybride. Notamment le système électrique forme un chargeur électrique OBC, connu de l'homme du métier et notamment embarqué dans un véhicule, pour charger une batterie haute tension à partir d'un réseau électrique extérieur. L'invention concerne un convertisseur de tension continu-continu résonant 1.

En référence à la figure 4, le système électrique comprend un convertisseur de tension continu-continu résonant 1, comprenant un circuit convertisseur 10, un redresseur 20, connecté en sortie dudit circuit convertisseur 10, et un filtre 30, connecté en sortie dudit redresseur 20. Le filtre 30 peut être omis. Le convertisseur de tension continu-continu résonant 1 permet de convertir une tension continue en une autre tension continue, la topologie détaillée de ce convertisseur de tension continu-continu résonant 1 sera décrite en détails dans une prochaine partie. Le circuit convertisseur 10, comprend un premier circuit 10-1 et un deuxième circuit 10-2, permettant d'obtenir notamment une tension alternative carrée, autrement dit un courant sinusoïdal, à partir d'une tension continue. Le redresseur 20 permet de convertir une tension alternative carrée en une tension redressée pulsée, c'est-à-dire une tension variable mais de signe constant. Le filtre 30 permet de « lisser » la tension obtenue précédemment, c'est-à-dire obtenir en sortie du filtre 30 la valeur moyenne de la tension d'entrée du filtre 30.

La figure 5 représente la topologie détaillée du système électrique présenté à la figure 4, c'est-à-dire d'un convertisseur de tension continu-continu résonant 1. Dans ce mode de réalisation détaillé, le premier circuit 10-1 du circuit convertisseur 10 du convertisseur de tension continu-continu résonant 1 comprend un circuit dit « HBS », de l'anglais « Half Bridge switches ». Par ailleurs, le deuxième circuit 10-2 du circuit convertisseur 10, relié au premier circuit 10-1, comprend un circuit convertisseur LLC résonant, dont la structure est connue de l'homme du métier.

Le circuit HBS comprend deux transistors T1 et T2, notamment des transistors à effet de champ, et assure une fonction d'alimentation à découpage, grâce aux transistors T1, T2 fonctionnant en commutation. Des pertes peuvent se produire lors de l'activation et de la désactivation de chaque transistor T1, T2. Des capacités C1, C2 peuvent être connectées respectivement en parallèle des transistors T1, T2 pour permettre des commutations à zéro de tension ou ZVS (pour « Zero Voltage Switching » en anglais), et de minimiser les pertes dues à la commutation et ainsi d'obtenir une fréquence de commutation plus élevée pour les transistors T1 et T2. Toujours en référence à la figure 5, le convertisseur LLC résonant du deuxième circuit 10-2, comprend une inductance de résonance $L_r$, deux capacités de résonnance $Cr/2$, dont une première capacité est connectée avec une borne haute du premier circuit 10-1 et une deuxième capacité est connectée à une borne basse du premier circuit 10-1, les deux capacités de résonance $Cr/2$ étant connectées à leur autre borne au niveau d'un point milieu, et un transformateur Tr, qui présente une inductance magnétisante au primaire.

Le redresseur 20 peut être un pont de quatre diodes permettant le redressement de tension. En effet, une tension alternative carrée, passant du positif au négatif, est redressée en une tension périodique de signe constant, soit positif, soit négatif.

Par ailleurs, toujours en référence à la figure 5, le filtre 30 peut comprendre une résistance R1 et une capacité C3 montées en parallèle, ou simplement une capacité montée en parallèle du redresseur 20 ou encore un filtre LC. Lorsque la tension d'entrée du filtre 30, correspondant à la tension de sortie du redresseur 20, augmente, la capacité C3 se charge. Puis, lorsque la tension d'entrée du filtre 30 diminue, la capacité C3 se décharge. Mais, de manière connue, une capacité se charge et se décharge « lentement » et donc l'amplitude de la tension délivrée en sortie du filtre 30 est beaucoup plus faible que celle de la tension d'entrée du filtre 30, voire presque nulle. Ainsi, la tension en sortie du filtre 30 est quasiment continue.

Par ailleurs, afin de détecter une potentielle surcharge d'une capacité de résonance $Cr/2$, le système électrique comprend une unité de commande TN. L'unité de commande TN est notamment un dispositif de traitement numérique et comprend un premier module de détermination TN1, un deuxième module de détermination TN2, un module de comparaison TNC et un élément de détection de défaillance UP. L'élément de détection de défaillance UP peut être une unité de pilotage des transistors, communément appelé « driver » par l'homme du métier.

En référence à la figure 6, il est représenté un mode de réalisation du procédé de détection d'une surcharge d'un convertisseur de tension continu-continu résonant 1. Selon ce procédé, on réalise une limitation de la tension Vr aux bornes de chaque capacité de résonance $Cr/2$.

Le deuxième module de détermination TN2 est relié à un point de mesure B1 pris en sortie du convertisseur de tension continu-continu résonant 1, notamment en sortie du redresseur 20, afin de mesurer le courant de sortie $I_{out}$. Le deuxième module de détermination TN2 est configuré pour déterminer la valeur moyenne $I_{s\_avg}$ du courant de sortie $I_{out}$ mesuré et pour envoyer la valeur moyenne $I_{s\_avg}$ ainsi déterminée au premier module de détermination TN1.

Le premier module de détermination TN1 est relié au deuxième module de détermination TN2 et reçoit dudit deuxième module de détermination TN2 la valeur moyenne $I_{s\_avg}$ déterminée du courant de sortie $I_{out}$.

En particulier, le premier module de détermination TN1 est configuré pour déterminer la valeur maximale $V_{r\_max}$ de tension aux bornes de chaque capacité de résonance $Cr/2$ et la valeur minimale $V_{r\_min}$ de tension aux bornes de chaque capacité de résonance $Cr/2$ à partir de la tension d'entrée $V_{in}$ du convertisseur de tension continu-continu résonant 1, de la valeur moyenne $I_{s\_avg}$ reçue du courant de sortie $I_{out}$, de la fréquence de commutation $F_s$ du convertisseur de tension continu-continu résonant 1, de la valeur des capacités de résonance $Cr/2$, de la valeur de la tension de sortie $V_{out}$ du convertisseur de tension continu-continu résonant 1, notamment du redresseur 20, du rapport de transformation N du transformateur Tr et de l'inductance magnétisante primaire $L_m$ du transformateur Tr.

Notamment, la valeur maximale $V_{r\_max}$ de la tension aux bornes de chaque capacité de résonance $Cr/2$ est déterminée suivant la formule :

[Math. 9]

$$V_{r\_max} = \frac{1}{2}V_{in} + \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

Par ailleurs, la valeur minimale $V_{r\_min}$ de la tension aux bornes de chaque capacité de résonance $Cr/2$ est déterminée suivant la formule :

[Math. 10]

$$V_{r\_min} = \frac{1}{2}V_{in} - \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

où : $V_{in}$ est la tension d'entrée du convertisseur de tension continu-continu résonant 1,

$C_r$ est la valeur des capacités de résonance Cr/2,
$F_s$ est la fréquence de commutation du convertisseur de tension continu-continu résonant 1,
N désigne le rapport de transformation du transformateur Tr,
$I_{s\_avg}$ est la valeur moyenne du courant de sortie $I_{out}$,
$V_{out}$ est la tension de sortie du convertisseur de tension continu-continu résonant 1, notamment du redresseur 20 et
$L_m$ désigne l'inductance magnétisante primaire du transformateur Tr.

**Comparaison entre une valeur minimale $V_{r\_min}$ de tension aux bornes de la capacité de résonance Cr/2 et un seuil bas de tension $Vr_{limite\_min}$ et comparaison entre une valeur maximale $V_{r\_max}$ de tension aux bornes de la capacité de résonance Cr/2 et un seuil haut de tension $Vr_{limite\_max}$.**

Le module de comparaison TNC de l'unité de commande TN est relié au premier module de détermination TN1 et reçoit dudit premier module de détermination TN1 la valeur maximale $V_{r\_max}$ de la tension aux bornes de chaque capacité de résonance Cr/2 et la valeur minimale $V_{r\_min}$ de la tension aux bornes de chaque capacité de résonance Cr/2.

Le module de comparaison TNC réalise la comparaison d'une part entre la valeur maximale $V_{r\_max}$ de la tension aux bornes de chaque capacité de résonance Cr/2 et un seuil haut de tension $Vr_{limite\_max}$ ; et d'autre part entre la valeur minimale $V_{r\_min}$ de la tension aux bornes de chaque capacité de résonance Cr/2 et un seuil bas de tension $Vr_{limite\_min}$.

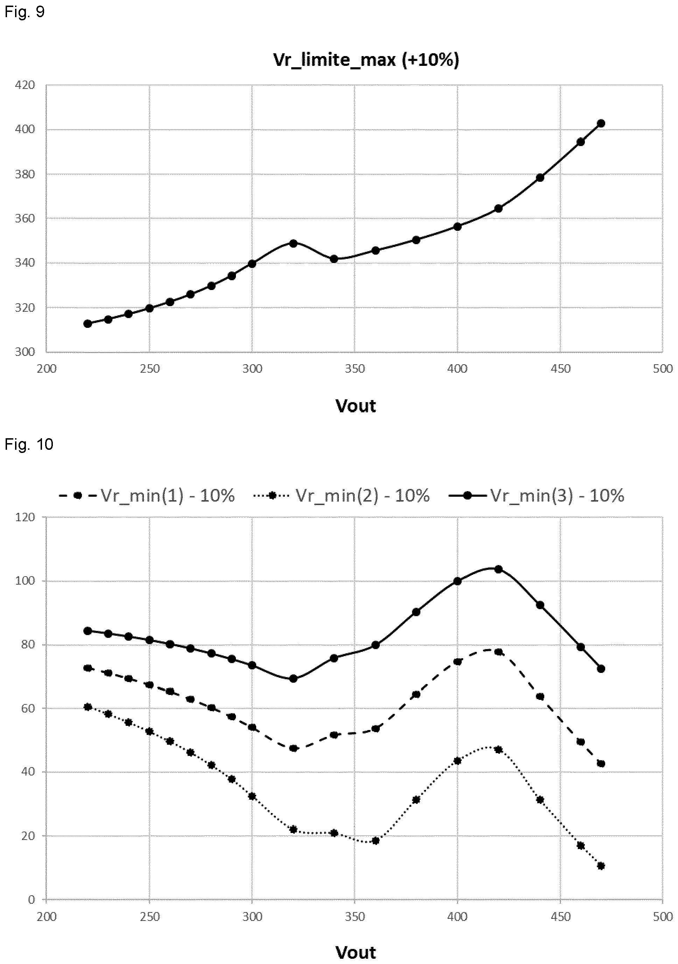

Le seuil haut de tension $Vr_{limite\_max}$ est notamment une valeur stockée dans une unité de mémoire de l'unité de commande TN. Le seuil haut de tension $Vr_{limite\_max}$ est par exemple sélectionné dans un ensemble de valeurs de seuil haut de tension $Vr_{limite\_max}$ en fonction de la tension de sortie $V_{out}$ du convertisseur de tension continu-continu résonant 1, notamment en sortie du redresseur 20. La figure 9 illustre un exemple d'un tel ensemble de valeurs de seuil haut de tension $Vr_{limite\_max}$. Une telle sélection est par exemple réalisée en temps réel.

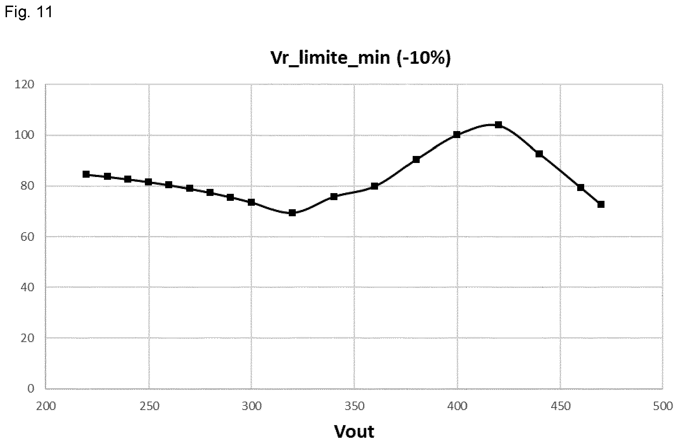

D'autre part, le seuil bas de tension $Vr_{limite\_min}$ est notamment une valeur stockée dans une unité de mémoire de l'unité de commande TN, pouvant être l'unité de mémoire dans laquelle est stockée la valeur du seuil haut de tension $Vr_{limite\_max}$ ou une toute autre unité de mémoire. Le seuil bas de tension $Vr_{limite\_min}$ est par exemple sélectionné dans un ensemble de valeurs de seuil bas de tension $Vr_{limite\_min}$ en fonction de la tension de sortie $V_{out}$ en sortie du convertisseur de tension continu-continu résonant 1, notamment en sortie du redresseur 20. La figure 11 illustre un exemple d'un tel ensemble de valeurs de seuil bas de tension $Vr_{limite\_min}$. Une telle sélection est par exemple réalisée en temps réel.

Ainsi, lorsque la valeur maximale $V_{r\_max}$ de la tension aux bornes de chaque capacité de résonance Cr/2 est supérieure au seuil haut de tension $Vr_{limite\_max}$ et/ou lorsque la valeur minimale $V_{r\_min}$ de la tension aux bornes de chaque capacité de résonance Cr/2 est inférieure au seuil bas de tension $Vr_{limite\_min}$, cela signifie que la capacité de résonance Cr/2 est en surcharge. Ainsi, la détection d'une défaillance du convertisseur de tension continu-continu résonant 1 est réalisée.

Toujours en référence à la figure 6, selon une variante, lorsqu'il y a détection d'une défaillance, s'en suit une étape de coupure du convertisseur de tension continu-continu résonant 1 qui stoppe le fonctionnement du convertisseur de tension continu-continu résonant 1. Pour cela, l'élément de détection de défaillance UP comprend un élément de coupure configuré pour arrêter le fonctionnement du convertisseur de tension continu-continu résonant 1 en cas de défaillance. Par exemple, le module de comparaison TNC envoie un message d'arrêt MS à l'élément de coupure de l'élément de détection de défaillance UP du convertisseur de tension continu-continu résonant 1. L'élément de coupure reçoit ledit message d'arrêt MS, contenant une commande d'arrêt. Après réception de ce message d'arrêt MS, l'élément de coupure arrête le fonctionnement du convertisseur de tension continu-continu résonant 1, protégeant ainsi le convertisseur de tension continu-continu résonant 1 d'une détérioration de ses composants, ladite détérioration étant due à une surcharge. L'élément de coupure comprend par exemple un relais connecté entre le convertisseur de tension continu-continu résonant 1 et un réseau électrique.

Une alternative possible à l'étape de coupure du convertisseur de tension continu-continu résonant 1 consiste en une étape dans laquelle l'élément de détection de défaillance UP imposerait au convertisseur de tension continu-continu résonant 1 de fonctionner en mode dégradé sans imposer un arrêt complet du convertisseur de tension continu-continu résonant 1.

**Détermination de l'ensemble de valeurs de seuil haut de tension Vr$_{limite\_max}$ et de l'ensemble de valeurs de seuil bas de tension Vr$_{limite\_min}$.**

L'ensemble de valeurs de seuil haut de tension Vr$_{limite\_max}$ et l'ensemble de valeurs de seuil bas de tension Vr$_{limite\_min}$ sont par exemple déterminés dans une phase préliminaire, et notamment dans une phase préliminaire de calibration du convertisseur de tension continu-continu résonant 1. Une telle phase préliminaire de calibration peut être faite une seule fois ou régulièrement au cours de la vie du convertisseur de tension continu-continu résonant 1. Un exemple de détermination de l'ensemble de valeurs de seuil haut de tension Vr$_{limite\_max}$ et de l'ensemble de valeurs de seuil bas de tension Vr$_{limite\_min}$ va être décrit dans les paragraphes suivants.

**Etape 1 : détermination de la tension d'entrée V$_{in}$**

[Tableaux 1]

| V$_{in(nom)}$ | V$_{out}$ | I$_{out}$ | P$_{out(max)}$ | F$_s$ |
|---|---|---|---|---|
| V | V | A | W | Hz |
| 370,00 | 220 | 12,00 | 2640 | $1,8511.10^5$ |
| 370,00 | 230 | 12,00 | 2760 | $1,8214.10^5$ |
| 370,00 | 240 | 12,00 | 2880 | $1,7898.10^5$ |
| 370,00 | 250 | 12,00 | 3000 | $1,7564.10^5$ |
| 370,00 | 260 | 12,00 | 3120 | $1,7208.10^5$ |
| 370,00 | 270 | 12,00 | 3240 | $1,6832.10^5$ |
| 370,00 | 280 | 12,00 | 3360 | $1,6431.10^5$ |
| 370,00 | 290 | 12,00 | 3480 | $1,6006.10^5$ |
| 370,00 | 300 | 12,00 | 3600 | $1,5554.10^5$ |
| 370,00 | 320 | 12,00 | 3600 | $1,4743.10^5$ |
| 370,00 | 340 | 10,59 | 3600 | $1,3597.10^5$ |
| 378,40 | 360 | 10,00 | 3600 | $1,2768.10^5$ |
| 395,60 | 380 | 9,47 | 3600 | $1,2533.10^5$ |
| 412,80 | 400 | 9,00 | 3600 | $1,2283.10^5$ |
| 425,00 | 420 | 8,57 | 3600 | $1,1644.10^5$ |
| 425,00 | 440 | 8,18 | 3600 | $1,0238.10^5$ |
| 425,00 | 460 | 7,83 | 3600 | $9,1886.10^5$ |
| 425,00 | 470 | 7,66 | 3600 | $8,7851.10^5$ |

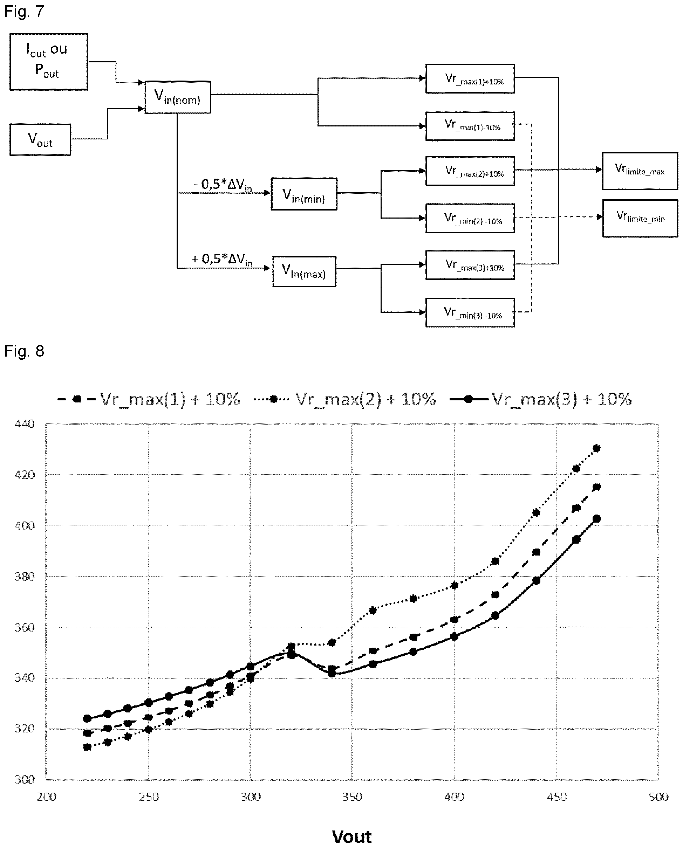

Tout d'abord, en référence au tableau précédent et à la figure 7, on considère un ensemble de tensions usuelles de sortie V$_{out}$ du convertisseur de tension continu-continu résonant 1, correspondant à différentes tensions possibles permettant notamment d'alimenter une batterie connectée en sortie du convertisseur de tension continu-continu résonant 1. Par exemple, on considère un ensemble de valeurs usuelles de tension de sortie V$_{out}$ avec un pas de 10 ou 20 V entre deux valeurs successives de tension de sortie V$_{out}$. De même, on considère un ensemble de valeurs usuelles de courant de sortie I$_{out}$ pour ce type de convertisseur de tension continu-continu résonant 1.

De plus, une relation existe entre la valeur nominale V$_{in(nom)}$ de la tension d'entrée V$_{in}$ du convertisseur de tension continu-continu résonant 1, la valeur de la tension de sortie V$_{out}$ et la valeur du courant de sortie I$_{out}$. Cette relation est, selon un mode de réalisation, définie selon la formule suivante :

[Math. 11]

$$V_{in(nom)} = 0,86 \times V_{out} + 58,8 + \frac{P_{out}}{360}$$

avec $P_{out}$ définie comme la puissance de sortie et $P_{out} = V_{out} \times I_{out}$.

Ainsi, pour chaque valeur usuelle de la tension de sortie $V_{out}$, et pour chaque valeur usuelle de courant de sortie $I_{out}$, on détermine une valeur nominale $V_{in(nom)}$ de la tension d'entrée $V_{in}$.

Puis, on détermine un ensemble de valeurs de la variation $\Delta V_{in}$ représentant l'ondulation autour de la valeur nominale $V_{in(nom)}$ de la tension d'entrée $V_{in}$ (ou autrement dit la différence entre la valeur nominale minimale $V_{in(min)}$ et la valeur nominale maximale $V_{in(max)}$ de la tension d'entrée). La variation $\Delta V_{in}$ est déterminée grâce à la formule connue suivante :

[Math. 12]

$$\Delta V_{in} = \frac{P_{out}}{\left(C.2\Pi.F_{line}.V_{in(nom)}\right)}$$

où : $P_{out}$ est la puissance de sortie du convertisseur de tension continu-continu résonant 1,

$V_{in(nom)}$ est la valeur nominale de la tension d'entrée du convertisseur de tension continu-continu résonant 1,

$C$ est la valeur de la capacité d'entrée du convertisseur de tension continu-continu résonant 1,

$F_{line}$ est la fréquence de la ligne, c'est-à-dire du réseau électrique auquel est connecté le système électrique en entrée.

On détermine alors un ensemble de valeurs nominales minimales $V_{in(min)}$ de la tension d'entrée $V_{in}$ et un ensemble de valeurs nominales maximales $V_{in(max)}$ de la tension d'entrée $V_{in}$ à partir de l'ensemble de valeurs nominales $V_{in(nom)}$ de la tension d'entrée $V_{in}$, chaque valeur desdits ensembles dépendant de la valeur usuelle de la tension de sortie $V_{out}$, en fonction de la variation $\Delta V_{in}$.

Ainsi, $V_{in(min)} = V_{in(nom)} - 0{,}5^*\Delta V_{in}$ et $V_{in(max)} = V_{in(nom)} + 0{,}5^*\Delta V_{in}$.

**Etape 2 : établissement de 3 scénarios de détermination de l'ensemble de valeurs de seuil haut de tension $Vr_{limite\_max}$ et de l'ensemble de valeurs de seuils bas de tension $Vr_{limite\_min}$.**

Ensuite il est déterminé un premier, deuxième et troisième ensembles de valeurs hautes de tension $Vr_{\_max(1)}$, $Vr_{\_max(2)}$ et $Vr_{\_max(3)}$ aux bornes des deux capacités de résonnance $Cr/2$, respectivement un premier, deuxième et troisième ensembles de valeurs basses de tension $Vr_{\_min(1)}$, $Vr_{\_min(2)}$ et $Vr_{\_min(3)}$ aux bornes des deux capacités de résonnance $Cr/2$ pour respectivement un ensemble de valeurs nominales $V_{in(nom)}$, un ensemble de valeurs nominales minimales $V_{in(min)}$ et un ensemble de valeurs nominales maximales $V_{in(max)}$. Le principe de détermination des trois possibilités de valeurs de seuil bas de tension $Vr_{limite\_min}$ et de valeur de seuil haut de tension $Vr_{limite\_max}$ est représenté schématiquement sur la figure 7.

**Premier ensemble :**

Tout d'abord, le premier ensemble de valeurs hautes de tension $Vr_{\_max(1)}$ est déterminé notamment à partir de l'ensemble de valeurs nominales $V_{in(nom)}$ de la tension d'entrée $V_{in}$. En effet, dans le cas présent, le premier ensemble de valeurs hautes de tension $Vr_{\_max(1)}$ est défini par exemple selon la formule correspondant à l'équation [Math. 9] développée précédemment, avec $V_{in} = V_{in(nom)}$.

De même, le premier ensemble de valeurs basses de tension $Vr_{\_min(1)}$ est déterminé notamment à partir de l'ensemble de valeurs nominales $V_{in(nom)}$ de la tension d'entrée $V_{in}$. En effet, dans le cas présent, le premier ensemble de valeurs basses de tension $Vr_{\_min(1)}$ est défini selon la formule correspondant à l'équation [Math. 10] développée précédemment, avec $V_{in} = V_{in(nom)}$.

[Tableaux 2]

| Vout | Vin(nom) | Vr_min(1) | Vr_min(1) - 10% | Vr_max(1) | Vr_max(1) + 10% |
|------|----------|-----------|------------------|-----------|------------------|
| V | V | V | V | V | V |
| 220 | 370 | 80,7 | 72,63 | 289,3 | 318,23 |
| 230 | 370 | 78,94 | 71,046 | 291,06 | 320,166 |

(suite)

| Vout | Vin(nom) | Vr_min(1) | Vr_min(1) - 10% | Vr_max(1) | Vr_max(1) + 10% |
|---|---|---|---|---|---|
| V | V | V | V | V | V |
| 240 | 370 | 77,01 | 69,309 | 292,99 | 322,289 |
| 250 | 370 | 74,88 | 67,392 | 295,12 | 324,632 |
| 260 | 370 | 72,53 | 65,277 | 297,47 | 327,217 |
| 270 | 370 | 69,92 | 62,928 | 300,08 | 330,088 |
| 280 | 370 | 67,01 | 60,309 | 302,99 | 333,289 |
| 290 | 370 | 63,75 | 57,375 | 306,25 | 336,875 |
| 300 | 370 | 60,07 | 54,063 | 309,93 | 340,923 |
| 320 | 370 | 52,83 | 47,547 | 317,17 | 348,887 |
| 340 | 370 | 57,4 | 51,66 | 312,6 | 343,86 |
| 360 | 378,4 | 59,69 | 53,721 | 318,71 | 350,581 |
| 380 | 395,6 | 71,71 | 64,539 | 323,89 | 356,279 |
| 400 | 412,8 | 82,88 | 74,592 | 329,92 | 362,912 |
| 420 | 425 | 86,32 | 77,688 | 338,89 | 372,779 |
| 440 | 425 | 70,78 | 63,702 | 354,22 | 389,642 |
| 460 | 425 | 54,9 | 49,41 | 370,1 | 407,11 |
| 470 | 425 | 47,34 | 42,606 | 377,66 | 415,426 |

Le premier ensemble de valeurs hautes de tension $Vr_{max(1)}$ et le premier ensemble de valeurs basses de tension $Vr_{min(1)}$ correspondantes sont listés dans le tableau 2 ci-dessus. Sont également représentés un premier ensemble de valeurs basses de tension $Vr_{min(1)-10\%}$ avec une marge de tolérance de 10% (en moins) et un premier ensemble de valeurs hautes de tension $Vr_{max(1)+10\%}$ avec une marge de tolérance de 10% (en plus). La marge de tolérance est optionnelle et peut prendre une autre valeur, par exemple une valeur comprise entre 8 et 12%.

**Deuxième ensemble :**

Le deuxième ensemble de valeurs hautes de tension $Vr_{max(2)}$ est déterminé notamment à partir de l'ensemble de valeurs nominales minimales $V_{in(min)}$ de la tension d'entrée $V_{in}$. En effet, dans le cas présent, le deuxième ensemble de valeurs hautes de tension $Vr_{max(2)}$ est défini selon la formule correspondant à l'équation [Math. 9] développée précédemment, avec $V_{in} = V_{in(min)}$.

De même, le deuxième ensemble de valeurs basses de tension $Vr_{min(2)}$ est déterminé notamment à partir de l'ensemble de valeurs nominales minimales $V_{in(min)}$ de la tension d'entrée $V_{in}$. En effet, dans le cas présent, le deuxième ensemble de valeurs basses de tension $Vr_{min(2)}$ est défini selon la formule correspondant à l'équation [Math. 10] développée précédemment, avec $V_{in} = V_{in(min)}$.

[Tableaux 3]

| Vout | Vin(min) | Vr_min(2) | Vr_min(2) - 10% | Vr_max(2) | Vr_max(2) + 10% |
|---|---|---|---|---|---|
| V | V | V | V | V | V |
| 220 | 351,67 | 67,26 | 60,534 | 284,4 | 312,84 |
| 230 | 350,83 | 64,63 | 58,167 | 286,21 | 314,831 |
| 240 | 350 | 61,75 | 55,575 | 288,25 | 317,075 |
| 250 | 349,17 | 58,58 | 52,722 | 290,58 | 319,638 |
| 260 | 348,33 | 55,09 | 49,581 | 293,25 | 322,575 |

(suite)

| Vout | Vin(min) | Vr_min(2) | Vr_min(2) - 10% | Vr_max(2) | Vr_max(2) + 10% |
|---|---|---|---|---|---|
| V | V | V | V | V | V |
| 270 | 347,5 | 51,2 | 46,08 | 296,3 | 325,93 |
| 280 | 346,67 | 46,83 | 42,147 | 299,84 | 329,824 |
| 290 | 345,83 | 41,87 | 37,683 | 303,96 | 334,356 |
| 300 | 345 | 36,17 | 32,553 | 308,83 | 339,713 |
| 320 | 345 | 24,48 | 22,032 | 320,52 | 352,572 |
| 340 | 345 | 23,2 | 20,88 | 321,8 | 353,98 |
| 360 | 353,95 | 20,64 | 18,576 | 333,31 | 366,641 |
| 380 | 372,22 | 34,82 | 31,338 | 337,4 | 371,14 |
| 400 | 390,39 | 48,25 | 43,425 | 342,14 | 376,354 |
| 420 | 403,24 | 52,26 | 47,034 | 350,98 | 386,078 |
| 440 | 403,24 | 34,81 | 31,329 | 368,42 | 405,262 |
| 460 | 403,24 | 19,01 | 17,109 | 384,23 | 422,653 |
| 470 | 403,24 | 11,86 | 10,674 | 391,38 | 430,518 |

Le deuxième ensemble de valeurs hautes de tension $Vr_{max(2)}$ et le deuxième ensemble de valeurs basses de tension $Vr_{min(2)}$ correspondantes sont listés dans le tableau 3 ci-dessus. Sont également représentés un deuxième ensemble de valeurs basses de tension $Vr_{min(2)-10\%}$ avec une marge de tolérance de 10% (en moins) et un deuxième ensemble de valeurs hautes de tension $Vr_{max(2)+10\%}$ avec une marge de tolérance de 10% (en plus). La marge de tolérance est optionnelle et peut prendre une autre valeur, par exemple une valeur comprise entre 8 et 12%.

**Troisième ensemble** :

Enfin le troisième ensemble de valeurs hautes de tension $Vr_{max(3)}$ est déterminé notamment à partir de l'ensemble de valeurs nominales maximales $V_{in(max)}$ de la tension d'entrée $V_{in}$. En effet, dans le cas présent, le troisième ensemble de valeurs hautes de tension $Vr_{max(3)}$ est défini selon la formule correspondant à l'équation [Math. 9] développée précédemment, avec $V_{in} = V_{in(max)}$.
De même, le troisième ensemble de valeurs basses de tension $Vr_{min(3)}$ est déterminé notamment à partir de l'ensemble de valeurs nominales maximales $V_{in(max)}$ de la tension d'entrée $V_{in}$. En effet, dans le cas présent, le troisième ensemble de valeurs basses de tension $Vr_{min(3)}$ est défini selon la formule correspondant à l'équation [Math. 10] développée précédemment, avec $V_{in} = V_{in(max)}$.

[Tableaux 4]

| Vout | Vin(max) | Vr_min(3) | Vr_min(3) - 10% | Vr_max(3) | Vr_max(3) + 10% |
|---|---|---|---|---|---|
| V | V | V | V | V | V |
| 220 | 388,33 | 93,78 | 84,402 | 294,55 | 324,005 |
| 230 | 389,17 | 92,82 | 83,538 | 296,34 | 325,974 |
| 240 | 390 | 91,74 | 82,566 | 298,26 | 328,086 |
| 250 | 390,83 | 90,54 | 81,486 | 300,32 | 330,352 |
| 260 | 391,67 | 89,14 | 80,226 | 302,53 | 332,783 |
| 270 | 392,5 | 87,58 | 78,822 | 304,92 | 335,412 |
| 280 | 393,33 | 85,82 | 77,238 | 307,51 | 338,261 |
| 290 | 394,17 | 83,84 | 75,456 | 310,32 | 341,352 |

(suite)

| Vout | Vin(max) | Vr_min(3) | Vr_min(3) - 10% | Vr_max(3) | Vr_max(3) + 10% |
|---|---|---|---|---|---|
| V | V | V | V | V | V |
| 300 | 395 | 81,61 | 73,449 | 313,39 | 344,729 |
| 320 | 395 | 77 | 69,3 | 318 | 349,8 |
| 340 | 395 | 84,11 | 75,699 | 310,89 | 341,979 |
| 360 | 402,85 | 88,69 | 79,821 | 314,16 | 345,576 |
| 380 | 418,98 | 100,4 | 90,36 | 318,58 | 350,438 |
| 400 | 435,21 | 111,14 | 100,026 | 324,07 | 356,477 |
| 420 | 446,76 | 115,3 | 103,77 | 331,46 | 364,606 |
| 440 | 446,76 | 102,78 | 92,502 | 343,99 | 378,389 |
| 460 | 446,76 | 88,04 | 79,236 | 358,73 | 394,603 |
| 470 | 446,76 | 80,5 | 72,45 | 366,26 | 402,886 |

Le troisième ensemble de valeurs hautes de tension $Vr_{\_max(3)}$ et le troisième ensemble de valeurs basses de tension $Vr_{\_min(3)}$ correspondantes sont listés dans le tableau 4 ci-dessus. Sont également représentés un troisième ensemble de valeurs basses de tension $Vr_{\_min(3)-10\%}$ avec une marge de tolérance de 10% (en moins) et un troisième ensemble de valeurs hautes de tension $Vr_{\_max(3)+10\%}$ avec une marge de tolérance de 10% (en plus). La marge de tolérance est optionnelle et peut prendre une autre valeur, par exemple une valeur comprise entre 8 et 12%.

**Etape 3 : choix de l'ensemble de valeurs de seuil bas de tension $Vr_{limite\_min}$ et choix de l'ensemble de valeurs de seuil haut de tension $Vr_{limite\_max}$**

Ensuite, l'ensemble de valeurs de seuil haut de tension $Vr_{limite\_max}$ est déterminé à partir des premier, deuxième et troisième ensembles de valeurs hautes de tension $Vr_{\_max(1)+10\%}$, $Vr_{\_max(2)+10\%}$ et $Vr_{\_max(3)+10\%}$, de préférence avec une marge de tolérance, lesdits premier, deuxième et troisième ensembles de valeurs hautes de tension $Vr_{\_max(1)+10\%}$, $Vr_{\_max(2)+10\%}$ et $Vr_{\_max(3)+10\%}$ étant représentés en fonction de la tension de sortie $V_{out}$ à la figure 8. Pour cela, on compare point par point le premier, deuxième et troisième ensembles de valeurs hautes de tension $Vr_{\_max(1)+10\%}$, $Vr_{\_max(2)+10\%}$ et $Vr_{\_max(3)+10\%}$, de préférence avec la marge de tolérance. Autrement dit, on compare entre elles les valeurs du premier, deuxième et troisième ensembles de valeurs hautes de tension $Vr_{\_max(1)+10\%}$, $Vr_{\_max(2)+10\%}$ et $Vr_{\_max(3)+10\%}$ pour chaque valeur de tension de sortie $V_{out}$ et on sélectionne la valeur minimale parmi les valeurs du premier, deuxième et troisième ensembles de valeurs hautes de tension $Vr_{\_max(1)+10\%}$, $Vr_{\_max(2)+10\%}$ et $Vr_{\_max(3)+10\%}$ pour chaque valeur usuelle de tension de sortie $V_{out}$. Enfin, l'ensemble de valeurs de seuil haut de tension $Vr_{limite\_max}$ est constitué de l'ensemble des valeurs minimales sélectionnées. Ledit ensemble de valeurs de seuil haut de tension $Vr_{limite\_max}$ est représenté graphiquement sur la figure 9.

De même, l'ensemble de valeurs de seuil bas de tension $Vr_{limite\_min}$ est déterminé à partir des premier, deuxième et troisième ensembles de valeurs basses de tension $Vr_{\_min(1)-10\%}$, $Vr_{\_min(2)-10\%}$ et $Vr_{\_min(3)-10\%}$, de préférence avec la marge de tolérance, lesdits premier, deuxième et troisième ensembles de valeurs basses de tension $Vr_{\_min(1)-10\%}$, $Vr_{\_min(2)-10\%}$ et $Vr_{\_min(3)-10\%}$ étant représentés en fonction de la tension de sortie $V_{out}$ à la figure 10. Pour cela, on compare point par point le premier, deuxième et troisième ensembles de valeurs basses de tension $Vr_{\_min(1)-10\%}$, $Vr_{\_min(2)-10\%}$ et $Vr_{\_min(3)-10\%}$ de préférence avec la marge de tolérance. Autrement dit, on compare entre elles les valeurs du premier, deuxième et troisième ensembles de valeurs basses de tension $Vr_{\_min(1)-10\%}$, $Vr_{\_min(2)-10\%}$ et $Vr_{\_min(3)-10\%}$ pour chaque valeur de tension de sortie $V_{out}$ et on sélectionne la valeur maximale parmi les valeurs du premier, deuxième et troisième ensembles de valeurs hautes de tension $Vr_{\_min(1)-10\%}$, $Vr_{\_min(2)-10\%}$ et $Vr_{\_min(3)-10\%}$ pour chaque valeur usuelle de tension de sortie $V_{out}$. Enfin, l'ensemble de valeurs de seuil bas de tension $Vr_{limite\_min}$ est constitué de l'ensemble des valeurs maximales sélectionnées. Ledit ensemble de valeurs de seuil bas de tension $Vr_{limite\_min}$ est représenté graphiquement sur la figure 11.

Selon une variante, l'ensemble de valeurs de seuil haut de tension $Vr_{limite\_max}$ est directement déterminé par comparaison entre les premier, deuxième et troisième ensembles de valeurs hautes de tension $Vr_{\_max(1)}$, $Vr_{\_max(2)}$ et $Vr_{\_max(3)}$, sans marge de tolérance. L'ensemble de valeurs de seuil bas de tension $Vr_{limite\_min}$ est alors, quant à lui, directement déterminé par comparaison entre les premier, deuxième et troisième ensembles de valeurs basses de tension $Vr_{\_min(1)}$, $Vr_{\_min(2)}$ et $Vr_{\_min(3)}$, sans marge de tolérance.

Dans une autre variante, lorsque la sélection de l'ensemble de valeurs de seuil haut de tension $Vr_{limite\_max}$ et l'ensemble de valeurs de seuil bas de tension $Vr_{limite\_min}$ a été réalisée, une première fonction continue, est extrapolée à partir de l'évolution du seuil haut de tension $Vr_{limite\_max}$ en fonction de la tension de sortie $V_{out}$, et une deuxième fonction continue est extrapolée à partir de l'évolution du seuil bas de tension $Vr_{limite\_min}$ en fonction de la tension de sortie $V_{out}$, sont générées. Ainsi, il n'y a plus seulement des valeurs discrètes, mais une courbe continue de valeurs de seuils haut de tension $Vr_{limite\_max}$ et une courbe continue de valeurs de seuils bas de tension $Vr_{limite\_min}$ en fonction de la tension de sortie $V_{out}$.

Enfin, la première fonction continue extrapolée et la deuxième fonction continue extrapolée peuvent être mémorisées dans une unité de mémoire de l'unité de commande TN.

## Revendications

1. Système électrique permettant la conversion d'une tension continue en une autre tension continue, comprenant :

   • un convertisseur de tension continu-continu résonant (1) comprenant un circuit convertisseur LLC résonant comprenant une inductance de résonance (L), deux capacités de résonnance (Cr/2) et un transformateur (Tr),
   • une unité de commande (TN) comprenant :

      o un premier module de détermination (TN1) d'une valeur maximale ($V_{r\_max}$) de la tension aux bornes de chaque capacité de résonance (Cr/2) et d'une valeur minimale ($V_{r\_min}$) de la tension aux bornes de chaque capacité de résonance (Cr/2) en fonction d'une tension de sortie ($V_{out}$) du convertisseur de tension continu-continu résonant (1),
      o un module de comparaison (TNC) entre ladite valeur maximale ($V_{r\_max}$) de la tension aux bornes de chaque capacité de résonance (Cr/2) et un seuil haut de tension ($Vr_{limite\_max}$) correspondant à ladite tension de sortie ($V_{out}$) et entre ladite valeur minimale ($V_{r\_min}$) de la tension aux bornes de chaque capacité de résonance (Cr/2) et un seuil bas de tension ($Vr_{limite\_min}$) correspondant à ladite tension de sortie ($V_{out}$),
      ○ un élément de détection de défaillance (UP) configuré pour détecter une défaillance du convertisseur de tension continu-continu résonant (1) si :

         ▪ ladite valeur maximale ($V_{r\_max}$) de la tension aux bornes de chaque capacité de résonance (Cr/2) est supérieure ou égale au seuil haut de tension ($Vr_{limite\_max}$), ou
         ▪ ladite valeur minimale ($V_{r\_min}$) de la tension aux bornes de chaque capacité de résonance (Cr/2) est inférieure ou égale au seuil bas de tension ($Vr_{limite\_min}$).

2. Système électrique selon la revendication précédente, dans lequel le convertisseur de tension continu-continu résonant (1) comprend un redresseur (20), connecté au niveau du secondaire du transformateur (Tr).

3. Système électrique, selon la revendication précédente, dans lequel un deuxième module de détermination (TN2) est configuré pour déterminer la valeur moyenne ($I_{s\_avg}$) du courant de sortie ($I_{out}$), à partir d'un point de mesure (B1) situé à une borne de sortie du redresseur (20), notamment une borne basse de sortie du redresseur (20).

4. Système électrique selon l'une des revendications précédentes, dans lequel le premier module de détermination (TN1) est configuré pour déterminer la valeur maximale ($V_{r\_max}$) de la tension aux bornes de chaque capacité de résonance (Cr/2) et la valeur minimale ($V_{r\_min}$) de la tension aux bornes de chaque capacité de résonance (Cr/2) à partir de la tension d'entrée ($V_{in}$) du convertisseur de tension continu-continu résonant (1), la valeur moyenne ($I_{s\_avg}$) du courant de sortie ($I_{out}$), la fréquence de commutation ($F_s$) du convertisseur de tension continu-continu résonant (1), la valeur des capacités de résonance (Cr/2), la valeur de la tension de sortie ($V_{out}$) du redresseur (20), le rapport de transformation (N) du transformateur (Tr) et l'inductance magnétisante primaire ($L_m$) du transformateur (Tr).

5. Système électrique selon la revendication précédente, dans lequel le premier module de détermination (TN1) est configuré pour :
   déterminer la valeur maximale ($V_{r\_max}$) de la tension aux bornes de chaque capacité de résonance (Cr/2) suivant la formule :

$$V_{r\_max} = \frac{1}{2}V_{in} + \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

et déterminer la valeur minimale ($V_{r\_min}$) de la tension aux bornes de chaque capacité de résonance (Cr/2) suivant la formule :

$$V_{r\_min} = \frac{1}{2}V_{in} - \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

où $V_{in}$ est la tension d'entrée du convertisseur de tension continu-continu résonant (1), $C_r$ est la valeur des capacités de résonance (Cr/2), $F_s$ est la fréquence de commutation du convertisseur de tension continu-continu résonant (1), N désigne le rapport de transformation du transformateur (Tr), $I_{s\_avg}$ est la valeur moyenne du courant de sortie ($I_{out}$), $V_{out}$ est la tension de sortie et $L_m$ désigne l'inductance magnétisante primaire du transformateur (Tr).

6. Système électrique selon l'une des revendications précédentes, dans lequel le module de comparaison (TNC) est configuré de sorte que

ledit seuil haut de tension ($Vr_{limite\_max}$) correspond à une valeur maximale de tension autorisée aux bornes de chaque capacité de résonance (Cr/2), notamment au-dessus de laquelle ladite capacité est en surcharge, et ledit seuil bas de tension ($Vr_{limite\_min}$) correspond à une valeur minimale de tension autorisée aux bornes de chaque capacité de résonance (Cr/2), notamment en dessous de laquelle ladite capacité de résonance est en surcharge.

7. Procédé de détection d'une surcharge d'un convertisseur de tension continu-continu résonant (1) mis en oeuvre dans un système électrique comportant un convertisseur de tension continu-continu résonant (1) comprenant un circuit convertisseur LLC résonant qui comprend une inductance de résonance (L), deux capacités de résonnance (Cr/2) et un transformateur (Tr),
ledit procédé étant **caractérisé en ce qu'**il comprend des étapes de :

• détermination d'une tension de sortie ($V_{out}$) du convertisseur de tension continu-continu résonant (1)
• détermination d'une valeur maximale ($V_{r\_max}$) de la tension aux bornes de chaque capacité de résonance (Cr/2) et d'une valeur minimale ($V_{r\_min}$) de la tension aux bornes de chaque capacité de résonance (Cr/2) en fonction d'une tension de sortie ($V_{out}$) du convertisseur de tension continu-continu résonant (1),
• comparaison entre un seuil haut de tension ($Vr_{limite\_max}$) et la valeur maximale ($V_{r\_max}$) de la tension aux bornes de chaque capacité de résonance (Cr/2) et entre un seuil bas de tension ($Vr_{limite\_min}$) et la valeur minimale ($V_{r\_min}$) de la tension aux bornes de chaque capacité de résonance (Cr/2),
• détection d'une défaillance du convertisseur de tension continu-continu résonant (1) si ladite valeur maximale ($V_{r\_max}$) de la tension aux bornes de chaque capacité de résonance (Cr/2) est supérieure ou égale au seuil haut de tension ($Vr_{limite\_max}$), et/ou si ladite valeur minimale ($V_{r\_min}$) de la tension aux bornes de chaque capacité de résonance (Cr/2) est inférieure ou égale au seuil bas de tension ($Vr_{limite\_min}$).

8. Procédé selon la revendication précédente, dans lequel l'étape de détection de défaillance correspond à la détection d'une surcharge d'une capacité de résonance (Cr/2).

9. Procédé selon la revendication 7 ou 8, comprenant, après l'étape de détection d'une défaillance, une étape de coupure du convertisseur de tension continu-continu résonant (1), dans laquelle le fonctionnement du convertisseur de tension continu-continu résonant (1) est arrêté.

10. Procédé selon l'une des revendications 7 à 9, comprenant une phase préliminaire de calibration dans laquelle ledit seuil bas de tension ($Vr_{limite\_min}$), respectivement ledit seuil haut de tension ($Vr_{limite\_max}$), est sélectionné dans un ensemble de valeurs de seuil bas de tension ($Vr_{limite\_min}$), respectivement dans un ensemble de valeurs de seuil haut de tension ($Vr_{limite\_max}$), en fonction de la valeur de la tension de sortie ($V_{out}$) du convertisseur de tension continu-continu résonant (1).

**11.** Procédé selon la revendication précédente, dans lequel, lors de la phase préliminaire de calibration, ledit ensemble de valeurs de seuil bas de tension (Vr$_{\text{limite\_min}}$) est déterminé par comparaison point par point d'ensembles de valeurs basses de tension (Vr$_{\text{\_min(1)}}$, Vr$_{\text{\_min(2)}}$, Vr$_{\text{\_min(3)}}$) et en sélectionnant la valeur maximale parmi les valeurs du premier, deuxième et troisième ensembles de valeurs basses de tension (Vr$_{\text{\_min(1)}}$, Vr$_{\text{\_min(2)}}$ et Vr$_{\text{\_min(3)}}$) pour chaque valeur usuelle de tension de sortie (V$_{\text{out}}$),

lesdits ensembles de valeurs basses de tension (Vr$_{\text{\_min(1)}}$, Vr$_{\text{\_min(2)}}$, Vr$_{\text{\_min(3)}}$) étant définis selon les formules suivantes :

$$V_{r_{\text{\_min}(1)}} = \frac{1}{2}V_{in(nom)} - \frac{\sqrt{2}}{C_r 2\pi F_s}\sqrt{\left(N \times I_{s_{avg}} \times \frac{\pi}{2\sqrt{2}}\right)^2 + \left(\frac{V_{out}}{4\sqrt{3} \times N \times F_s \times L_m}\right)^2}$$

$$V_{r_{\text{\_min}(2)}} = \frac{1}{2}V_{in(min)} - \frac{\sqrt{2}}{C_r 2\pi F_s}\sqrt{\left(N \times I_{s_{avg}} \times \frac{\pi}{2\sqrt{2}}\right)^2 + \left(\frac{V_{out}}{4\sqrt{3} \times N \times F_s \times L_m}\right)^2}$$

$$V_{r_{\text{\_min}(3)}} = \frac{1}{2}V_{in(max)} - \frac{\sqrt{2}}{C_r 2\pi F_s}\sqrt{(N \times I_{s\_avg} \times \frac{\pi}{2\sqrt{2}})^2 + (\frac{V_{out}}{4\sqrt{3} \times N \times F_s \times L_m})^2}$$

où V$_{\text{in(nom)}}$ est la valeur nominale de la tension d'entrée (V$_{\text{in}}$) du convertisseur de tension continu-continu résonant (1), V$_{\text{in(min)}}$ = V$_{\text{in(nom)}}$ - 0,5*$\Delta$V$_{\text{in}}$ est la valeur nominale minimale de la tension d'entrée (V$_{\text{in}}$), V$_{\text{in(max)}}$ = V$_{\text{in(nom)}}$ + 0,5*$\Delta$V$_{\text{in}}$ est la valeur nominale maximale de la tension d'entrée (V$_{\text{in}}$) et $\Delta$V$_{\text{in}}$ représente l'ondulation autour de la valeur nominale (V$_{\text{in(nom)}}$) de la tension d'entrée (V$_{\text{in}}$),

ledit ensemble de valeurs de seuil haut de tension (Vr$_{\text{limite\_max}}$) est déterminé par comparaison point par point d'ensembles de valeurs hautes de tension (Vr$_{\text{\_max(1)}}$, Vr$_{\text{\_max(2)}}$, Vr$_{\text{\_max(3)}}$) et en sélectionnant la valeur minimale parmi les valeurs du premier, deuxième et troisième ensembles de valeurs hautes de tension (Vr$_{\text{\_max(1)}}$, Vr$_{\text{\_max(2)}}$ et Vr$_{\text{\_max(3)}}$) pour chaque valeur usuelle de tension de sortie (V$_{\text{out}}$),

lesdits ensembles de valeurs hautes de tension (Vr$_{\text{\_max(1)}}$, Vr$_{\text{\_max(2)}}$, Vr$_{\text{\_max(3)}}$) étant définis selon les formules suivantes :

$$V_{r_{\text{\_max}(1)}} = \frac{1}{2}V_{in(nom)} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r_{\text{\_max}(2)}} = \frac{1}{2}V_{in(min)} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r_{\text{\_max}(3)}} = \frac{1}{2}V_{in(max)} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

**Patentansprüche**

**1.** Elektrisches System zur Umwandlung einer Gleichspannung in eine andere Gleichspannung, das Folgendes beinhaltet:

• einen Gleichstrom-Gleichstrom-Resonanzspannungswandler (1), der eine LLC-Resonanzwandlerschaltung beinhaltet, die eine Resonanzinduktivität (L), zwei Resonanzkapazitäten (Cr/2) und einen Transformator (Tr) beinhaltet,

• eine Steuereinheit (TN), die Folgendes beinhaltet:

  ◦ ein erstes Modul zur Bestimmung (TN1) eines Maximalwerts ($V_{r\_max}$) der Spannung an den Klemmen jeder Resonanzkapazität (Cr/2) und eines Minimalwerts ($V_{r\_min}$) der Spannung an den Klemmen jeder Resonanzkapazität (Cr/2) in Abhängigkeit von einer Ausgangsspannung ($V_{out}$) des Gleichstrom-Gleichstrom-Resonanzspannungswandlers (1),
  ◦ ein Modul zum Vergleichen (TNC) des Maximalwerts ($V_{r\_max}$) der Spannung an den Klemmen jeder Resonanzkapazität (Cr/2) mit einem oberen Spannungsschwellenwert ($Vr_{limite\_max}$), der der Ausgangsspannung ($V_{out}$) entspricht, und des Minimalwerts ($V_{r\_min}$) der Spannung an den Klemmen jeder Resonanzkapazität (Cr/2) mit einem unteren Spannungsschwellenwert ($Vr_{limite\_min}$), der der Ausgangsspannung ($V_{out}$) entspricht,
  ◦ ein Element zur Detektion eines Ausfalls (UP), das dazu konfiguriert ist, einen Ausfall des Gleichstrom-Gleichstrom-Resonanzspannungswandlers (1) zu detektieren, wenn:

    ▪ der Maximalwert ($V_{r\_max}$) der Spannung an den Klemmen jeder Resonanzkapazität (Cr/2) größer als oder gleich dem oberen Spannungsschwellenwert ($Vr_{limite\_max}$) ist oder
    ▪ der Minimalwert ($V_{r\_min}$) der Spannung an den Klemmen jeder Resonanzkapazität (Cr/2) kleiner als oder gleich dem unteren Spannungsschwellenwert ($Vr_{limite\_min}$) ist.

2. Elektrisches System nach dem vorhergehenden Anspruch, wobei der Gleichstrom-Gleichstrom-Resonanzspannungswandler (1) einen Gleichrichter (20) beinhaltet, der auf der Sekundärseite des Transformators (Tr) angeschlossen ist.

3. Elektrisches System nach dem vorhergehenden Anspruch, wobei ein zweites Bestimmungsmodul (TN2) dazu konfiguriert ist, den Mittelwert ($I_{s\_avg}$) des Ausgangsstroms ($I_{out}$) anhand eines Messpunkts (B1) zu bestimmen, der sich an einer Ausgangsklemme des Gleichrichters (20), insbesondere einer unteren Ausgangsklemme des Gleichrichters (20), befindet.

4. Elektrisches System nach einem der vorhergehenden Ansprüche, wobei das erste Bestimmungsmodul (TN1) dazu konfiguriert ist, den Maximalwert ($V_{r\_max}$) der Spannung an den Klemmen jeder Resonanzkapazität (Cr/2) und den Minimalwert ($V_{r\_min}$) der Spannung an den Klemmen jeder Resonanzkapazität (Cr/2) anhand der Eingangsspannung ($V_{in}$) des Gleichstrom-Gleichstrom-Resonanzspannungswandlers (1), des Mittelwerts ($I_{s\_avg}$) des Ausgangsstroms ($I_{out}$), der Umschaltfrequenz ($F_s$) des Gleichstrom-Gleichstrom-Resonanzspannungswandlers (1), des Werts der Resonanzkapazitäten (Cr/2), des Werts der Ausgangsspannung ($V_{out}$) des Gleichrichters (20), des Transformationsverhältnisses (N) des Transformators (Tr) und der primären Magnetisierungsinduktivität ($L_m$) des Transformators (Tr) zu bestimmen.

5. Elektrisches System nach dem vorhergehenden Anspruch, wobei das erste Bestimmungsmodul (TN1) zu Folgendem konfiguriert ist:
Bestimmen des Maximalwerts ($V_{r\_max}$) der Spannung an den Klemmen jeder Resonanzkapazität (Cr/2) gemäß der Formel:

$$V_{r\_max} = \frac{1}{2}V_{in} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

und Bestimmen des Minimalwerts ($V_{r\_min}$) der Spannung an den Klemmen jeder Resonanzkapazität (Cr/2) gemäß der Formel:

$$V_{r\_min} = \frac{1}{2}V_{in} - \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

wobei $V_{in}$ die Eingangsspannung des Gleichstrom-Gleichstrom-Resonanzspannungswandlers (1) ist, $C_r$ der Wert der Resonanzkapazitäten (Cr/2) ist, $F_s$ die Umschaltfrequenz des Gleichstrom-Gleichstrom-Resonanzspannungswandlers (1) ist, N das Transformationsverhältnis des Transformators (Tr) bezeichnet, $I_{s\_avg}$ der Mittelwert des Ausgangsstroms ($I_{out}$) ist, $V_{out}$ die Ausgangsspannung ist und $L_m$ die primäre Magnetisierungsinduktivität des Transformators (Tr) bezeichnet.

6. Elektrisches System nach einem der vorhergehenden Ansprüche, wobei das Vergleichsmodul (TNC) so konfiguriert ist, dass:

> der obere Spannungsschwellenwert ($Vr_{limite\_max}$) einem maximalen Spannungswert, der an den Klemmen jeder Resonanzkapazität (Cr/2) zulässig ist, entspricht, oberhalb dessen die Kapazität insbesondere überlastet ist, und der untere Spannungsschwellenwert ($Vr_{limite\_min}$) einem minimalen Spannungswert, der an den Klemmen jeder Resonanzkapazität (Cr/2) zulässig ist, entspricht, unterhalb dessen die Resonanzkapazität insbesondere überlastet ist.

7. Verfahren zur Detektion einer Überlastung eines Gleichstrom-Gleichstrom-Resonanzspannungswandlers (1), das in einem elektrischen System umgesetzt wird, das einen Gleichstrom-Gleichstrom-Resonanzspannungswandler (1) beinhaltet, der eine LLC-Resonanzwandlerschaltung beinhaltet, die eine Resonanzinduktivität (L), zwei Resonanzkapazitäten (Cr/2) und einen Transformator (Tr) beinhaltet, wobei das Verfahren **dadurch gekennzeichnet ist, dass** es folgende Schritte beinhaltet:

> • Bestimmen einer Ausgangsspannung ($V_{out}$) des Gleichstrom-Gleichstrom-Resonanzspannungswandlers (1),
> • Bestimmen eines Maximalwerts ($V_{r\_max}$) der Spannung an den Klemmen jeder Resonanzkapazität (Cr/2) und eines Minimalwerts ($V_{r\_min}$) der Spannung an den Klemmen jeder Resonanzkapazität (Cr/2) in Abhängigkeit von einer Ausgangsspannung ($V_{out}$) des Gleichstrom-Gleichstrom-Resonanzspannungswandlers (1),
> • Vergleichen eines oberen Spannungsschwellenwerts ($Vr_{limite\_max}$) mit dem Maximalwert ($V_{r\_max}$) der Spannung an den Klemmen jeder Resonanzkapazität (Cr/2) und eines unteren Spannungsschwellenwerts ($Vr_{limite\_min}$) mit dem Minimalwert ($V_{r\_min}$) der Spannung an den Klemmen jeder Resonanzkapazität (Cr/2),
> • Detektieren eines Ausfalls des Gleichstrom-Gleichstrom-Resonanzspannungswandlers (1), wenn der Maximalwert ($V_{r\_max}$) der Spannung an den Klemmen jeder Resonanzkapazität (Cr/2) größer als oder gleich dem oberen Spannungsschwellenwert ($Vr_{limite\_max}$) ist und/oder wenn der Minimalwert ($V_{r\_min}$) der Spannung an den Klemmen jeder Resonanzkapazität (Cr/2) kleiner als oder gleich dem unteren Spannungsschwellenwert ($Vr_{limite\_min}$) ist.

8. Verfahren nach dem vorhergehenden Anspruch, wobei der Schritt des Detektierens eines Ausfalls dem Detektieren einer Überlastung einer Resonanzkapazität (Cr/2) entspricht.

9. Verfahren nach Anspruch 7 oder 8, das nach dem Schritt des Detektierens eines Ausfalls einen Schritt des Abschaltens des Gleichstrom-Gleichstrom-Resonanzspannungswandlers (1) beinhaltet, während dessen der Betrieb des Gleichstrom-Gleichstrom-Resonanzspannungswandlers (1) gestoppt wird.

10. Verfahren nach einem der Ansprüche 7 bis 9, das eine Vorab-Kalibrierphase beinhaltet, während der der untere Spannungsschwellenwert ($Vr_{limite\_min}$) bzw. der obere Spannungsschwellenwert ($Vr_{limite\_max}$) in Abhängigkeit von dem Wert der Ausgangsspannung ($V_{out}$) des Gleichstrom-Gleichstrom-Resonanzspannungswandlers (1) aus einem Satz von unteren Spannungsschwellenwerten ($Vr_{limite\_min}$) bzw. aus einem Satz von oberen Spannungsschwellenwerten ($Vr_{limite\_max}$) ausgewählt wird.

11. Verfahren nach dem vorhergehenden Anspruch, wobei während der Vorab-Kalibrierphase der Satz von unteren Spannungsschwellenwerten ($Vr_{limite\_min}$) durch einen Punkt-für-Punkt-Vergleich von Sätzen von unteren Spannungswerten ($Vr_{\_min(1)}$, $Vr_{\_min(2)}$, $Vr_{\_min(3)}$) und das Auswählen des Maximalwerts aus den Werten des ersten, zweiten und dritten Satzes von unteren Spannungswerten ($Vr_{\_min(1)}$, $Vr_{\_min(2)}$ und $Vr_{\_min(3)}$) für jeden gängigen Ausgangsspannungswert ($V_{out}$) bestimmt wird, wobei die Sätze von unteren Spannungswerten ($Vr_{\_min(1)}$, $Vr_{\_min(2)}$, $Vr_{\_min(3)}$) gemäß den folgenden Formeln definiert werden:

$$V_{r\_min(1)} = \frac{1}{2}V_{in(nom)}$$

$$- \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_min(2)} = \frac{1}{2}V_{in(min)} - \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_min(3)} = \frac{1}{2}V_{in(max)}$$

$$- \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

wobei $V_{in(nom)}$ der Nennwert der Eingangsspannung ($V_{in}$) des Gleichstrom-Gleichstrom-Resonanzspannungswandlers (1) ist, $V_{in(min)}$ = $V_{in(nom)}$ - 0,5*$\Delta V_{in}$ der Minimalnennwert der Eingangsspannung ($V_{in}$) ist, $V_{in(max)}$ = $V_{in(nom)}$ + 0,5*$\Delta V_{in}$ der Maximalnennwert der Eingangsspannung ($V_{in}$) ist und $\Delta V_{in}$ das Schwingen der Eingangsspannung ($V_{in}$) um den Nennwert ($V_{in(nom)}$) darstellt,

wobei der Satz von oberen Spannungsschwellenwerten ($Vr_{limite\_max}$) durch einen Punkt-für-Punkt-Vergleich von Sätzen von oberen Spannungswerten ($Vr_{\_max(1)}$, $Vr_{\_max(2)}$, $Vr_{\_max(3)}$) und das Auswählen des Minimalwerts aus den Werten des ersten, zweiten und dritten Satzes von oberen Spannungswerten ($Vr_{\_max(1)}$, $Vr_{\_max(2)}$ und $Vr_{\_max(3)}$) für jeden gängigen Ausgangsspannungswert ($V_{out}$) bestimmt wird, wobei die Sätze von oberen Spannungswerten ($Vr_{\_max(1)}$, $Vr_{\_max(2)}$, $Vr_{\_max(3)}$) gemäß den folgenden Formeln definiert werden:

$$V_{r\_max(1)} = \frac{1}{2}V_{in(nom)}$$

$$+ \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_max(2)} = \frac{1}{2}V_{in(min)}$$

$$+ \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_max(3)} = \frac{1}{2}V_{in(max)}$$

$$+ \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

**Claims**

1. Electrical system which makes it possible to convert one DC voltage into another DC voltage, comprising:

   • a resonant DC-to-DC voltage converter (1) comprising a resonant LLC converter circuit comprising a resonant inductor (L), two resonant capacitors (Cr/2) and a transformer (Tr),
   • a control unit (TN) comprising:

   ∘ a first determination module (TN1) for determining a maximum value ($V_{r\_max}$) of the voltage across the terminals of each resonant capacitor (Cr/2) and a minimum value ($V_{r\_min}$) of the voltage across the terminals of each resonant capacitor (Cr/2) as a function of an output voltage ($V_{out}$) of the resonant DC-to-DC voltage converter (1),
   ∘ a comparison module (TNC) for comparing said maximum value ($V_{r\_max}$) of the voltage across the terminals of each resonant capacitor (Cr/2) with a high voltage threshold ($Vr_{limit\_max}$) corresponding to said output voltage ($V_{out}$) and said minimum value ($V_{r\_min}$) of the voltage across the terminals of each resonant capacitor (Cr/2) with a low voltage threshold ($Vr_{limit\_min}$) corresponding to said output voltage ($V_{out}$),
   ∘ a failure detection element (UP) configured to detect a failure of the resonant DC-to-DC voltage converter (1) if:

   ▪ said maximum value ($V_{r\_max}$) of the voltage across the terminals of each resonant capacitor (Cr/2) is greater than or equal to the high voltage threshold ($Vr_{limit\_max}$), or
   ▪ said minimum value ($V_{r\_min}$) of the voltage across the terminals of each resonant capacitor (Cr/2) is less than or equal to the low voltage threshold ($Vr_{limit\_min}$).

2. Electrical system according to the preceding claim, in which the resonant DC-to-DC voltage converter (1) comprises a rectifier (20), connected at the secondary of the transformer (Tr).

3. Electrical system according to the preceding claim, in which a second determination module (TN2) is configured to determine the average value ($I_{s\_avg}$) of the output current ($I_{out}$), from a measurement point (B1) located at an output terminal of the rectifier (20), notably a low output terminal of the rectifier (20).

4. Electrical system according to one of the preceding claims, in which the first determination module (TN1) is configured to determine the maximum value ($V_{r\_max}$) of the voltage across the terminals of each resonant capacitor (Cr/2) and the minimum value ($V_{r\_min}$) of the voltage across the terminals of each resonant capacitor (Cr/2) from the input voltage ($V_{in}$) of the resonant DC-to-DC voltage converter (1), the average value ($I_{s\_avg}$) of the output current ($I_{out}$), the switching frequency ($F_s$) of the resonant DC-to-DC voltage converter (1), the value of the resonant capacitors (Cr/2), the value of the output voltage ($V_{out}$) of the rectifier (20), the transformation ratio (N) of the transformer (Tr) and the primary magnetizing inductance ($L_m$) of the transformer (Tr).

5. Electrical system according to the preceding claim, in which the first determination module (TN1) is configured to: determine the maximum value ($V_{r\_max}$) of the voltage across the terminals of each resonant capacitor (Cr/2) in accordance with the formula:

$$V_{r\_max} = \frac{1}{2}V_{in} + \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

and determine the minimum value ($V_{r\_min}$) of the voltage across the terminals of each resonant capacitor (Cr/2) in accordance with the formula:

$$V_{r\_min} = \frac{1}{2}V_{in} - \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

where $V_{in}$ is the input voltage of the resonant DC-to-DC voltage converter (1), $C_r$ is the value of the resonant capacitors (Cr/2), $F_s$ is the switching frequency of the resonant DC-to-DC voltage converter (1), N denotes the transformation ratio of the transformer (Tr), $I_{s\_avg}$ is the average value of the output current ($I_{out}$), $V_{out}$ is the output voltage and $L_m$ denotes the primary magnetizing inductance of the transformer (Tr).

**6.** Electrical system according to one of the preceding claims, in which the comparison module (TNC) is configured so that

said high voltage threshold ($Vr_{limit\_max}$) corresponds to a maximum voltage value allowed across the terminals of each resonant capacitor (Cr/2), notably above which said capacitor is overloaded, and
said low voltage threshold ($Vr_{limit\_min}$) corresponds to a minimum voltage value allowed across the terminals of each resonant capacitor (Cr/2), notably below which said resonant capacitor is overloaded.

**7.** Method for detecting an overloading of a resonant DC-to-DC voltage converter (1), implemented in an electrical system comprising a resonant DC-to-DC voltage converter (1) comprising a resonant LLC converter circuit which comprises a resonant inductor (L), two resonant capacitors (Cr/2) and a transformer (Tr),
said method being **characterized in that** it comprises steps of:

• determining an output voltage ($V_{out}$) of the resonant DC-to-DC voltage converter (1),
• determining a maximum value ($V_{r\_max}$) of the voltage across the terminals of each resonant capacitor (Cr/2) and a minimum value ($V_{r\_min}$) of the voltage across the terminals of each resonant capacitor (Cr/2) as a function of an output voltage ($V_{out}$) of the resonant DC-to-DC voltage converter (1),
• comparing a high voltage threshold ($Vr_{limit\_max}$) with the maximum value ($V_{r\_max}$) of the voltage across the terminals of each resonant capacitor (Cr/2) and a low voltage threshold ($Vr_{limit\_min}$) with the minimum value ($V_{r\_min}$) of the voltage across the terminals of each resonant capacitor (Cr/2),
• detecting a failure of the resonant DC-to-DC voltage converter (1) if said maximum value ($V_{r\_max}$) of the voltage across the terminals of each resonant capacitor (Cr/2) is greater than or equal to the high voltage threshold ($Vr_{limit\_max}$), and/or if said minimum value ($V_{r\_min}$) of the voltage across the terminals of each resonant capacitor (Cr/2) is less than or equal to the low voltage threshold ($Vr_{limit\_min}$).

**8.** Method according to the preceding claim, in which the failure detection step corresponds to detecting an overloading of a resonant capacitor (Cr/2).

**9.** Method according to Claim 7 or 8, comprising, after the step of detecting a failure, a step of cutting off the resonant DC-to-DC voltage converter (1), in which the operation of the resonant DC-to-DC voltage converter (1) is halted.

**10.** Method according to one of Claims 7 to 9, comprising a preliminary calibration phase in which said low voltage threshold ($Vr_{limit\_min}$) or said high voltage threshold ($Vr_{limit\_max}$), respectively, is selected from a set of low voltage threshold values ($Vr_{limit\_min}$) or from a set of high voltage threshold values ($Vr_{limit\_max}$) , respectively, as a function of the value of the output voltage ($V_{out}$) of the resonant DC-to-DC voltage converter (1).

**11.** Method according to the preceding claim, in which, during the preliminary calibration phase, said set of low voltage threshold values ($Vr_{limit\_min}$) is determined by comparing sets of low voltage values ($Vr_{\_min(1)}$, $Vr_{\_min(2)}$, $Vr_{\_min(3)}$) point by point and by selecting the maximum value from among the values of the first, second and third sets of low voltage values ($Vr_{\_min(1)}$, $Vr_{\_min(2)}$ and $Vr_{\_min(3)}$) for each standard output voltage value ($V_{out}$),
said sets of low voltage values ($Vr_{\_min(1)}$, $Vr_{\_min(2)}$, $Vr_{\_min(3)}$) being defined according to the following formulas:

$$V_{r\_\min(1)} = \frac{1}{2}V_{in(nom)} - \frac{\sqrt{2}}{C_r 2\pi F_s}\sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_\min(2)} = \frac{1}{2} V_{in(min)}$$
$$- \frac{\sqrt{2}}{C_r 2\pi F_s} \sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_\min(3)} = \frac{1}{2} V_{in(max)}$$
$$- \frac{\sqrt{2}}{C_r 2\pi F_s} \sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

where $V_{in(nom)}$ is the nominal value of the input voltage ($V_{in}$) of the resonant DC-to-DC voltage converter (1), $V_{in(min)}$ = $V_{in(nom)}$ - 0.5*$\Delta V_{in}$ is the minimum nominal value of the input voltage ($V_{in}$), $V_{in(max)}$ = $V_{in(nom)}$ + 0.5*$\Delta V_{in}$ is the maximum nominal value of the input voltage ($V_{in}$) and $\Delta V_{in}$ represents the undulation about the nominal value ($V_{in(nom)}$) of the input voltage ($V_{in}$),

said set of high voltage threshold values ($Vr_{limit\_max}$) is determined by comparing sets of high voltage values ($Vr_{\_max(1)}$, $Vr_{\_max(2)}$, $Vr_{\_max(3)}$) point by point and by selecting the minimum value from among the values of the first, second and third sets of high voltage values ($Vr_{\_max(1)}$, $Vr_{\_max(2)}$ and $Vr_{\_max(3)}$) for each standard output voltage value ($V_{out}$),
said sets of high voltage values ($Vr_{\_max(1)}$, $Vr_{\_max(2)}$, $Vr_{\_max(3)}$) being defined according to the following formulas:

$$V_{r\_\max(1)} = \frac{1}{2} V_{in(nom)}$$
$$+ \frac{\sqrt{2}}{C_r 2\pi F_s} \sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_\max(2)} = \frac{1}{2} V_{in(min)}$$
$$+ \frac{\sqrt{2}}{C_r 2\pi F_s} \sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

$$V_{r\_\max(3)} = \frac{1}{2} V_{in(max)}$$
$$+ \frac{\sqrt{2}}{C_r 2\pi F_s} \sqrt{\left(N \times I_{s\_avg} \times \frac{\pi}{2\sqrt{2}}\right)^2 + \left(\frac{V_{out}}{4\sqrt{3} \times N \times F_s \times L_m}\right)^2}$$

Fig. 1

Fig. 2

Fig. 3

Fig. 4

Fig. 5

Fig. 6

Fig. 7

Fig. 8

Fig. 9

**Vr_limite_max (+10%)**

Vout

Fig. 10

Vout

EP 3 758 206 B1

Fig. 11

Vr_limite_min (-10%)

27

**EP 3 758 206 B1**

## RÉFÉRENCES CITÉES DANS LA DESCRIPTION

### Documents brevets cités dans la description

- US 2011255321 A
- CN 207518331